Europäisches Patentamt

European Patent Office

Office européen des brevets

(11) Veröffentlichungsnummer: **0 026 421**
**A1**

(12) **EUROPÄISCHE PATENTANMELDUNG**

(21) Anmeldenummer: **80105679.7**

(22) Anmeldetag: **22.09.80**

(51) Int. Cl.³: **F 16 L 11/12**
**F 16 L 9/12, F 16 L 59/14**

(30) Priorität: **27.09.79 DE 7927416 U**

(43) Veröffentlichungstag der Anmeldung:
**08.04.81 Patentblatt 81/14**

(84) Benannte Vertragsstaaten:
**BE DE FR GB IT LU NL**

(71) Anmelder: **Egeplast Werner Strumann GmbH & Co.**
**Nordwalder Strasse 80**
**D-4407 Emsdetten(DE)**

(72) Erfinder: **Bergmann, Karl**
**Woeste 27**
**D-4401 Westbevern-Brock(DE)**

(74) Vertreter: **Meldau, Gustav, Dipl.-Ing.**
**Vennstrasse 9**
**D-4830 Gütersloh 1(DE)**

(54) Kunststoffrohr.

(57) Insbesondere für Fussbodenheizung, jedoch auch für andere Wasserleitungszwecke verwendetes Rohr (1) aus Kunststoff. Zum Vermeiden einer Sauerstoff-Diffusion durch den Kunststoff und nachteilige Einleitung in die im Rohr (1) geleitete Flüssigkeit ist das Rohr (1) mit einer für Sauerstoff undurchlässigen Beschichtung (3) versehen, die vorzugsweise aus Metall besteht.

Fig. 2

EP 0 026 421 A1

Die Erfindung bezieht sich auf ein Kunststoffrohr, wie es insbesondere für Fussbodenheizungen verwendet wird.

Bei Fussbodenheizungen werden Rohre mit verhältnismässig geringem Querschnitt über einem großen Teil oder dem gesamten Boden eines Raumes in bestimmten Abständen ausgelegt und mit dem Estrich oder einem anderen Fussbodenbelag überdeckt. Diese Rohre können aus Kunststoff sein. Üblicherweise haben derartige Rohre einen Aussendurchmesser zwischen 1o und 25 mm und bestehen aus einem Polyolefin-Kunststoff. Die Verwendung von Kunststoffen für solche Rohre hat gegenüber der Verwendung von Metallen, beispielsweise Kupfer, einige wesentliche Vorteile. Es hat sich im Laufe der Zeit jedoch herausgestellt, dass bei Kunststoffen eine Sauerstoff-Diffusion möglich ist, so dass das durch die Rohre fliessende Wasser im Laufe der Zeit mit Sauerstoff angereichert wird. Dieses mit Sauerstoff angereicherte Wasser wirkt nachteilig auf andere Teile der Heizungsanlage, beispielsweise die Kessel, Armaturen usw., bei denen metallische Oberflächen, insbesondere Stahl, von diesem mit Sauerstoff angereicherten Wasser beaufschlagt sind. Es können Oxidations-, insbesondere erhebliche Rost-Schäden entstehen, die gegenüber üblichen Heizungsanlagen wesentlich schneller fortschreiten und wesentlich eher zu Schäden führen.

Die Erfindung hat sich die Aufgabe gestellt, diese Nachteile zu vermeiden und ein Kunststoffrohr, insbesondere für Fussbodenheizungen zu schaffen, bei dem eine Sauerstoff-Diffusion durch die Rohrwandung vollständig verhindert oder zumindest auf ein zulässiges Mass vermindert ist.

Zur Lösung dieser Aufgabe ist ein Kunststoffrohr, insbesondere für Fussbodenheizungen dadurch gekennzeichnet, dass es mit einer für Sauerstoff undurchlässigen Beschichtung versehen ist.

Diese Beschichtung besteht vorzugsweise aus Metall, aus einer
Metalldispersion oder -Folie. Vorteilhaft ist diese Beschichtung auf der Aussenseite des Rohres angeordnet.

Nach einer zweckmässigen Weiterbildung der Erfindung ist die
Beschichtung des Rohres auf der Aussenseite von einer Schutzschicht umgeben, die vorteilhaft aus einer Kunststoff-Ummantelung besteht.

Das aus Polyolefin bestehende Rohr ist nach einer besonders
zweckmässigen Ausführungsform der Erfindung mit einer Metalldispersion beschichtet und diese wiederum ist mit einer Ummantelung aus Kunststoff versehen. Nach einer anderen vorteilhaften Ausführungsform ist das aus Polyolefin bestehende Rohr
mit einer Metallfolie beschichtet und diese wiederum mit einer
Kunststoff-Folie abgedeckt.

Durch die Beschichtung des Rohres mit einem für Sauerstoff undurchlässigen Material wird verhindert, dass Sauerstoff, der
durch die Wand des Rohres hindurch diffundieren könnte, sich
mit dem im Rohr fliessenden Wasser vermischt und dieses anreichert, so dass dadurch Oxidationsschäden an von dem Wasser
benetzten Oberflächen an anderer Stelle einer Heizungs- oder
anderen Anlage vermieden sind. Die Anordnung der sauerstoffundurchlässigen Beschichtung auf der Aussenseite des Rohres
bewirkt insbesondere, dass Sauerstoff schon nicht in die Wandungen des Rohres eindringen kann. Wenn die Beschichtung aus
einer Metall-Dispersion besteht oder auch aus einer Metallfolie,
ist die vorteilhafte Möglichkeit gegeben, diese Beschichtung
nach der Herstellung des Rohres im Strang-Spritzverfahren unmittelbar und sogleich in einem Arbeitsgang aufzubringen.

Da auf der Aussenseite des Rohres angeordnete Beschichtungen, insbesondere beim rauhen Baustellenbetrieb der Gefahr einer Beschädigung und damit der Durchbrechung der für Sauerstoff undurchlässigen Schicht ausgesetzt sind, wird nach einer besonders zweckmässigen Ausbildungsform der Erfindung die Beschichtung des Rohres mit einer Ummantelung versehen. Diese Ummantelung kann vorteilhaft ebenfalls aus Polyolefin bestehen, wobei dieses ebenfalls in einem unmittelbar der Rohrherstellung folgenden Arbeitsgang kontinuierlich aufgebracht wird. Die Ummantelung kann aber auch aus einer Kunststoffolie bestehen. Es ist beispielsweise möglich, unmittelbar hinter der Kühlstrecke der Rohrherstellung zwei Wickelvorrichtungen anzuordnen, von denen die erste eine Metallfolie in Form eines Streifens um das Rohr herumlegt, wobei für eine dichte Verbindung der Streifenkanten gesorgt wird. Eine zweite Vorrichtung legt eine Ummantelung aus einer streifenförmigen Kunststoff-Folie um das mit der Metallbeschichtung versehene Rohr herum als Schutz gegen mechanische Beschädigung.

Die Erfindung wird nachstehend anhand eines Ausführungsbeispiels mit Bezug auf die Zeichnungen näher erläutert. In den Zeichnungen zeigen:

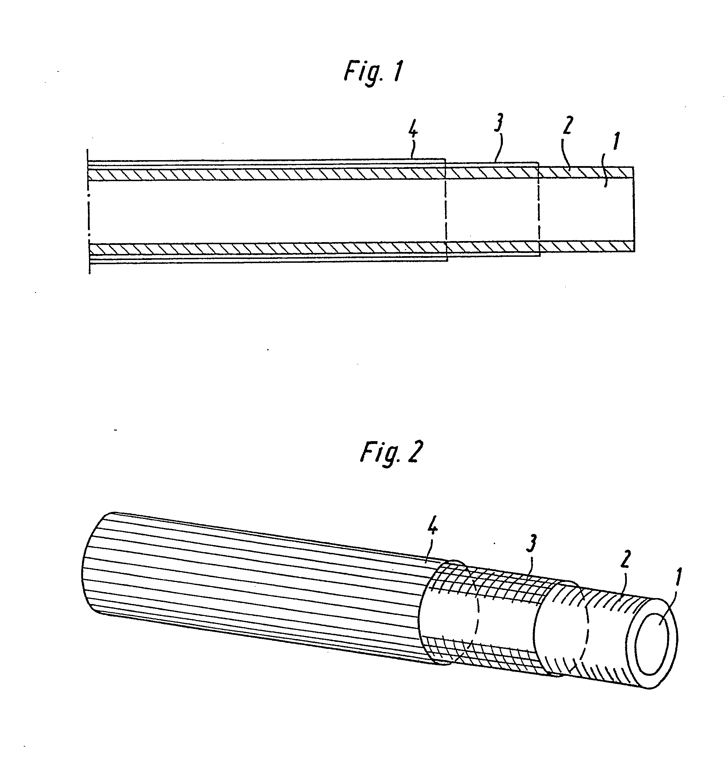

Fig. 1    einen Querschnitt durch ein Rohr nach der Erfindung entlang seiner Achse;

Fig. 2    eine perspektivische Darstellung eines Rohres nach der Erfindung.

Ein Rohr 1 aus Kunststoff hat einen äusseren Durchmesser von 1o bis etwa 25 mm. Die Rohrwandung 2 hat eine Stärke von etwa 3 mm. Dieses Rohr 1 ist auf seiner Aussenseite mit einer sauerstoffundurchlässigen Beschichtung versehen, die aus einer Metallfolie

- 4 -

besteht. Diese Beschichtung 3 ist unmittelbar auf der Aussenfläche des Rohres 1 angeordnet, und die Ränder der Folie sind dicht miteinander verbunden.

Als Schutz, insbesondere gegen mechanische Beanspruchung der Beschichtung 3, ist diese noch mit einer weiteren Ummantelung 4 versehen, die vorzugsweise aus Kunststoff bzw. Kunststoff-Folie besteht. Diese Ummantelung 4 muss nicht unbedingt fest und dicht auf der Beschichtung 3 aufliegen, sondern es kann ein gewisser Abstand oder Zwischenraum zwischen der Beschichtung und der Ummantelung vorhanden sein. Dadurch wird der mechanische Schutz der Beschichtung noch zusätzlich verbessert.

Die Beschichtung kann eine Stärke von bis zu 4oo my haben, und die als mechanischer Schutz umgebende Ummantelung 4 hat eine Stärke von nur wenigen Zehntel Millimetern. Bei Verwendung einer Beschichtung in Form einer Folie wird vorteilhaft eine Silberfolie bzw. Aluminiumfolie verwendet.

Patentansprüche
_____

1. Kunststoffrohr, insbesondere für Fussbodenheizungen, dadurch gekennzeichnet, dass es mit einer für Sauerstoff undurchlässigen Beschichtung (3) versehen ist.

2. Kunststoffrohr nach Anspruch 1, dadurch gekennzeichnet, dass die Beschichtung (3) aus Metall, einer Metalldispersion oder -Folie besteht.

3. Kunststoffrohr nach Anspruch 1, dadurch gekennzeichnet, dass die Beschichtung auf der Aussenseite des Rohres (1) angeordnet ist.

4. Kunststoffrohr nach Anspruch 1 und 3, dadurch gekennzeichnet, dass die Beschichtung (3) des Rohres (1) von einer Schutzschicht (4) umgeben ist.

5. Kunststoffrohr nach Anspruch 4, dadurch gekennzeichnet, dass die Schutzschicht (4) aus einer Kunststoff-Ummantelung besteht.

6. Kunststoffrohr nach Anspruch 1 und 5, dadurch gekennzeichnet, dass das aus Polyolefin bestehende Rohr (1) mit einer Metalldispersion beschichtet und diese mit einer Ummantelung aus Kunststoff versehen ist.

7. Kunststoffrohr nach Anspruch 1 und 5, dadurch gekennzeichnet, dass das aus Polyolefin bestehende Rohr mit einer Metallfolie beschichtet und diese mit einer Kunststoff-Folie abgedeckt ist.

Fig. 1

Fig. 2

Europäisches
Patentamt

**0026421**
Nummer der Anmeldung

# EUROPÄISCHER RECHERCHENBERICHT

EP 80105679.7

| Kategorie | Kennzeichnung des Dokuments mit Angabe, soweit erforderlich, der maßgeblichen Teile | betrifft Anspruch |
|---|---|---|
| **EINSCHLÄGIGE DOKUMENTE** | | |
| A | <u>DE - A1 - 2 755 323</u> (NOTTER)<br>* Seite 7, Zeilen 23,24 *<br>-- | 1 |
| A | <u>DE - A1 - 1 814 042</u> (CRYOTHERM INC.)<br>* Seite 4, letzter Absatz;<br>Seite 5, 1.und 2.Absatz *<br>-- | 1 |
| | <u>DE - A - 2 236 375</u> (TECHNOFORM)<br>* Gesamt *<br>-- | 1,3,4 |
| | <u>DE - A1 - 2 433 717</u> (JOHNS-MANVILLE CORP)<br>* Gesamt *<br>-- | 1,2,3 |
| | <u>FR - A1 - 2 408 785</u> (MICHELIN & CIE)<br>* Gesamt *<br>---- | 1,2,3 |

**KLASSIFIKATION DER ANMELDUNG (Int. Cl.³)**

F 16 L 11/12
F 16 L 9/12
F 16 L 59/14

**RECHERCHIERTE SACHGEBIETE (Int. Cl.³)**

F 16 L 11/00
F 24 D 19/00
E 03 B 7/00
E 03 C 1/00
F 16 L 9/00
F 16 L 59/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. | | |
|---|---|---|---|
| **Recherchenort**<br>WIEN | **Abschlußdatum der Recherche**<br>19-11-1980 | **Prüfer**<br>ENDLER | |

EPA form 1503.1   08.78